(19) Europäisches Patentamt
European Patent Office
Office européen des brevets

(11) Publication number: **0 095 373**
**B1**

(12) **EUROPEAN PATENT SPECIFICATION**

(45) Date of publication of patent specification: **11.03.87**

(51) Int. Cl.$^4$: **G 21 C 19/02,** B 66 C 17/00

(21) Application number: **83302956.4**

(22) Date of filing: **23.05.83**

(54) **Refueling of nuclear reactor.**

(30) Priority: **26.05.82 US 382269**

(43) Date of publication of application:
**30.11.83 Bulletin 83/48**

(45) Publication of the grant of the patent:
**11.03.87 Bulletin 87/11**

(84) Designated Contracting States:
**BE CH DE GB LI SE**

(56) References cited:
**DE-A-2 408 261**
**DE-B-1 173 761**
**FR-A-1 584 760**
**GB-A-1 074 282**
**GB-A-2 060 238**

**NUCLEAR ENGINEERING INTERNATIONAL, vol. 26, no. 315, July 1981, pages 42-44, Sutton, Surrey, G.B., B. FONTAINE et al.: "Swiss station will be semi-automated"**

**ATOMKERNENERGIE/KERNTECHNIK, vol. 39, no. 4, 1981, pages 273-276, München, DE., J. LILEG: "Eine Lademaschine für Druckwasserreaktoren"**

(73) Proprietor: **WESTINGHOUSE ELECTRIC CORPORATION**
**Westinghouse Building Gateway Center**
**Pittsburgh Pennsylvania 15235 (US)**

(72) Inventor: **Kaufmann, John William**
**4113 Dundee Drive**
**Murrysville Pennsylvania (US)**
Inventor: **Swidwa, Kenneth John**
**8 Hodel Street**
**Cheswick Pennsylvania (US)**
Inventor: **Hornak, Leonard Paul**
**13640 Bruce Drive**
**North Huntingdon Pennsylvania (US)**

(74) Representative: **van Berlyn, Ronald Gilbert**
**23, Centre Heights**
**London, NW3 6JG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 095 373 B1

## Description

This invention relates to the art of nuclear reactor power plants. It has particular relationship to the refueling of the reactors of such plants. In carrying out the refueling, the reactor to be refueled is at the base of a pit in a containment filled with water to a depth of 20 or 30 feet. During refueling, component assemblies of the reactor or front refueling racks are engaged by grippers or grapples of a mast assembly, raised, transported from their position of origin and lowered in the position where they are to be deposited. The component assemblies are highly radioactive and are engaged, raised, transported and lowered under a substantial depth of water. To carry out this operation, there is provided apparatus including a bridge moveable along a track on the containment. A trolley is moveable on a track on the bridge. The trolley carries a mast assembly having a rotatable supporting mast from which the component-assembly engaging-raising-and-lowering means is suspended. This means is sometimes herein referred to as "component-assembly handling mechanism" or "assembly-handling mechanism" or simply "mechanism". With the bridge and trolley at selectably different positions along their tracks, the mast assembly is suspended with the assembly-handling mechanisms at selectably different positions of the area of the pit or of the reactor within the pit (cf. GB—A—2060238).

It is indispensable to successful refueling that the mechanism on the mast assembly be positioned during each operation to engage and raise the exact assembly which is selected for transport. Since the reactor is under water, the positioning of the mechanisms must be carried out with the necessary precision with at best a heavily clouded view of the nuclear core. It is also necessary that the depth of the mechanisms in the water be known. The tracks on the bridge and containment define a coordinate system whose coordinates serve to determine the positions of the mechanisms on the mast assembly. The tracks in Swidwa, and predominantly in proir art apparatus, are linear and at right angles to each other defining a Cartesian coordinate system. With the tracks of other configurations, other coordinate systems may define the positions of these mechanisms. For example, if the bridge moves in a circular track on the containment and the trolley moves on a radial track, the coordinate system would be a polar coordinate system.

The coordinates of the positions of the bridge and trolley along the tracks are magnitudes which indicate the positions of the engaging-raising-and-lowering means over the pit. In addition, there are provided indications of the vertical positions of these mechanisms. The mechanisms are raised or lowered by a hoist which is typically a winch.

The mast assembly includes a supporting mast from which the component-assembly-handling mechanisms are suspended. To accommodate component assemblies that are out of position radially, the supporting mast and the mechanisms suspend from it are rotatable in a bearing member secured to the trolley. The mechanisms on the mast assembly include electric and fluid-pressure operable means to which electricity and fluid must be supplied. Electric power is derived from an outlet on the containment. The cable from this outlet through which the power flows extends to the bridge through festoon loops which permit movement of the bridge. From the bridge the cable extends to the trolley where it supplies power to a control console. The electric operable means on the mechanisms of the mast assembly are connected through wires and other facilities to the control console on the trolley where they derive their power. Typically, the pressure fluid is compressed and derived from a compressor on a bridge and supplied through an air conductor or base. The air hose extends to the trolley whence it extends to the mast assembly and is connected to the fluid-pressure operable means on the mechanisms of the mast assembly.

Electric conductors may be designated variously as "cables" or "wires". The word "cables" is frequently applied to members which include a number of different electric conductors that conduct different currents and are insulated from each other. At times the word "conduit" is used to describe a tube including a number of wires. Conductors of fluids are often designated as "hoses"; "air hoses" or "water hoses" or the like. In this application and particularly in the claims the words "conductor" or "electric conductor" or "fluid conductor" will at times be used to designate generally cables or wire or conduits which conduct electric current or hoses which conduct fluids.

Since the mast assembly is rotatable relative to the trolley, provisions must be made in the electric and air conductors between the trolley and the mast assembly to permit this relative motion. In accordance with the teachings of the prior art the electric and fluid conductors are grouped together, mounted on a support on the trolley and extended to the rotatable mast assembly. To permit relative movement of the mast assembly and trolley a long festoon loop must be interposed in the grouped conductor between the support and mast assembly. It is necessary that this loop have a point of attachment on the support which is high in the apparatus. This is undesirable. In addition, the fluid and electric conductors are subject to twisting when the mast assembly is rotated.

The hoist which raises or lowers the component-assembly-handling mechanisms has cables connected to the mast assembly through swivel joints. The cables are wound or unwound from a hoist drum and remain aligned during raising or lowering. During lowering the fluid and electric conductors connected to the mechanisms must be payed out or let out and during raising of the mechanisms these conductors must be retracted. To permit the resulting changes in the lengths of the fluid and electric conductors, these conductors are wound on reels. In accordance with the teachings of the prior art, the mast assembly is rotated relative to the hoist and conductor reels. In such a structure the fluid and electric lines turn with the mast assembly. The turning of these conductors limit the rotation of the mast assembly. In addition the conductors may foul the hoist cables.

It is therefore the principal object of this invention to overcome the difficulties and drawbacks of the prior art arrangements, that is to provide a refueling apparatus for a reactor in whose operations the conductors leading to the apparatus, shall not be twisted during operation so that operation of the mast assembly is not restricted.

With this object in view, the present invention resides in an apparatus for refueling a nuclear reactor disposed in a containment, said apparatus including a mast assembly for engaging, raising and lowering selected ones of component assemblies of said reactor, a trolley supporting said mast assembly and having means for raising or lowering said mast assembly, a bridge movably supported above said reactor and having a first track thereon for said trolley, first drive means, connected to said trolley for moving said trolley forward and backward along said first track, a second track on said containment for said bridge, second drive means associated with said bridge for moving said bridge forward and backward along said second track, said first and second tracks extending along non-parallel paths, so that movement of said bridge along said second track causes movement of said mast assembly in a first direction and movement of said trolley causes movement of said mast assembly in a second direction, said mast assembly including a supporting mast rotatably mounted on said trolley for engaging, raising and lowering component assemblies, electrical operating means associated with said supporting mast and on said engaging-raising-and-lowering means for operation thereof and electrical facilities supported on said trolley and connected by electrical conductors to said electrical operating means, characterized by a flexible cable tray connected to said supporting mast at one end, extending from said one end peripherally at least partly around said mast and thence departing tangentially from said mast and terminating at the opposite end a predetermined distance from said mast so that, when said mast is rotated in one direction, said tray is wound peripherally on said mast and when said tray is rotated in the opposite direction, said tray is unwound peripherally from said mast, said conductors, in passing between said electrical operating means and said facilities, extending through said cable tray, the conductors following the winding and unwinding of said tray, whereby the portions of said conductors extending away from said tray from said one end and from said opposite end are not affected by the rotation of said supporting mast.

As the mast is rotated in one direction relative to the trolley, the tray and the conductors which it carries are wound on the mast and as it is rotated in the opposite direction tray and the conductors are unwound from the mast.

Typically the end of cable tray connected to the mast is entered by the portions of the conductors from the parts in the mast; the portion of the conductors connected to the parts on the trolley leave the tray at the opposite end. The portions of the conductors between the parts on the mast and the tray, at the end where the tray is connected to the mast, are rotatable with the mast. The portions of the conductors between the other end of the cable tray and the parts in the trolley are not moved.

In accordance with this invention the hoist and the reels for the fluid and electric conductors are mounted on the supporting mast and are rotatable with the supporting mast and the component-assembly handling mechanisms. There is no relative motion to cause interferences between the hoist cables and the fluid and electric conductors. The rotation of the supporting mast is not limited and the mast cables are not fouled by the conductors.

A television camera and a light source and reflector are mounted on the gripper housing of the mast assembly. The light source and reflector are positioned to illuminate a part of the top, i.e., the upper nozzle, of the fuel assembly to be transported or which includes another component assembly to be transported. The television camera is positioned to pick up an image of this part. The receiver connected to this television camera and the viewing monitor are in the control console. The viewing monitor may be provided with cross hairs which may serve to orient the mast assembly appropriately with reference to the fuel assembly. For example, the mast assembly may be rotated to a position in which the cross hairs pass through the centers of the images of the bolts in a corner of the fuel assembly which support the hold-down springs of the nozzle. The identification and location of the fuel assembly may be recorded in the computer. In additon, a video recorder may be provided. Such a recorder would produce a permanent record of the refueling and core mapping operations.

The invention will become more readily apparent from the following description of preferred embodiments thereof shown, by way of example only, in the accompanying drawings, in which:

Figure 1 is a plan view of apparatus in accordance with this invention;

Figure 2 is a view in end elevation in the direction of the arrows II—II of Figure 1;

Figure 3 is a view in side elevation in the direction of the arrows III—III of Figure 1;

Figure 3A is a fragmental view in selection taken along line IIIA—IIIA of Figure 2 showing the manner in which the channels which form a truck of the bridge support the I-beams of the bridge;

Figure 3B is a view in side elevation showing the manner in which the I-beam of the bridge supports the motor which drives the driven wheels;

Figure 3C is a plan view of the trolley with the control console and mast assembly removed;

Figure 3D is a fragmental plan view of the trolley showing the drive for the trolley;

Figure 4 is a copy of a photograph showing the pulse generator, which produces pulses to measure the position of the bridge along its track, and the manner in which it is driven;

Figure 5 is a copy of a photograph similar to Figure 4 showing the pulse generator for the trolley and the manner in which it is driven;

Figure 5A is a copy of a photograph showing the cable tray between the bridge and trolley;

Figure 6 is a copy of a photograph showing the pulse generator, which produces pulses which measures the position of the component-assembly handling mechanisms, and the manner in which it is driven;

Figure 7 is a plan view of the track assembly for the bridge;

Figure 8 is a view in transverse section taken along line VIII—VIII of Figure 7;

Figure 9 is a fragmental view in transverse section taken along line IX—IX of Figure 2;

Figure 10 is a fragmental view in transverse section taken along line X—X of Figure 1;

Figure 11 is a fragmental view in the direction XI—XI of Figure 2;

Figure 12 is a fragmental view enlarged of the portion of Figure 2 in circle XII;

Figure 13 is a fragmental view in transverse section taken along XIII—XIII of Figure 1;

Figure 14 is a fragmental view enlarged of the portion of Figure 1 in ellipse XIV of Figure 3;

Figure 15 is a fragmental view in longitudinal section taken along line XV—XV of Figure 14;

Figure 16 is a view in side elevation with parts broken away and parts sectioned of the upper part of the mast assembly of apparatus in accordance with this invention showing the limit switch which checks the calibration of the coordinate involved in raising and lowering the component-assembly handling mechanism;

Figure 16A is a partial view in section taken along line XVIA—XVIA of Figure 16;

Figure 17 is a block diagram showing the manner in which the coordinate system of the apparatus in accordance with this invention is recalibrated;

Figure 18 is a schematic of the pressure fluid systems for operating the pistons which control the component-assembly handling mechanism of this invention;

Figure 19 is a schematic of the electrical system of the component-assembly handling mechanism of this invention;

Figure 20 is a copy of a photograph showing the manner in which the conductors on the component-assembly handling mechanisms are mechanically related to these mechanisms;

Figure 21 is a view in side elevation of a cable tray used in the practice of this invention;

Figure 22 is a view in side elevation of the pivot plates on which the outer plates nearest the end secured to the mast pivot;

Figure 22A is a view in side elevation of the pivot plates on which the outer plates near the opposite end pivot;

Figure 23 is a view in perspective, generally diagrammatic, of the fluid and electric conductor reels as seen from the rear of the apparatus with reference to Figure 2;

Figure 24 is a view in perspective, generally diagrammatic, showing the path followed by the fluid conductor between the bridge and the trolley;

Figure 25 is a view in perspective, generally diagrammatic showing the path followed by the fluid conductor between the trolley and the mast;

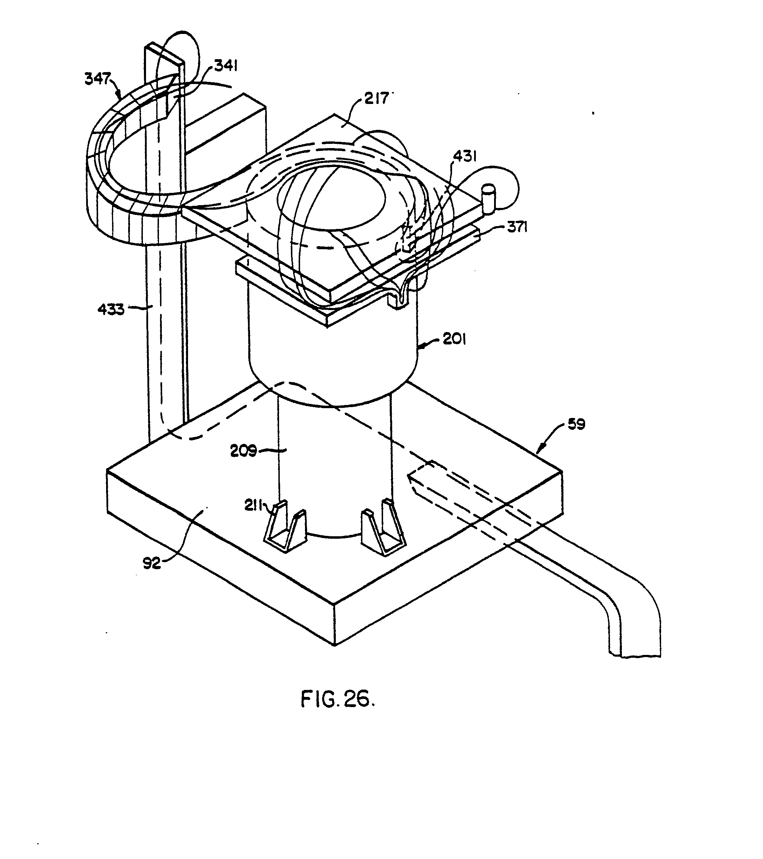

Figure 26 is a like view in perspective, generally diagrammatic, showing the path followed by the electric conductors between the cable tray and the mast assembly;

Figure 27 is a diagram showing the manner in which the cable tray is wound on, and unwound from, the supporting mast;

Figure 27A is a copy of a photograph of the apparatus according to this invention showing predominantly the cable tray and its content;

Figure 27B is a copy of a photograph showing the manner in which the fluid and electric conductors enter the cable tray at the end where it is connected to the supporting mast;

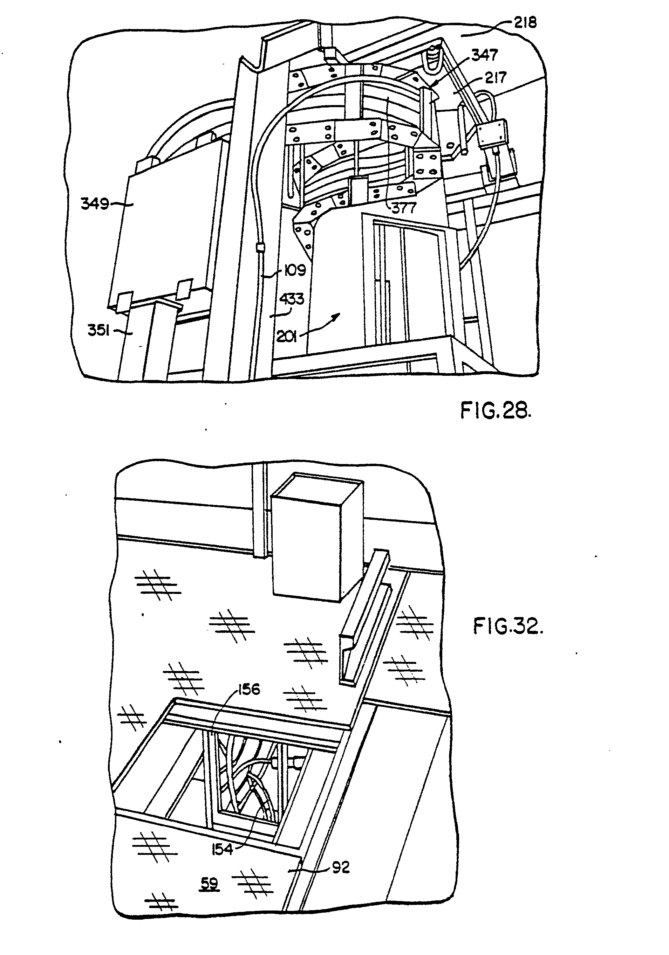

Figure 28 is a copy of a photograph showing the manner in which the fluid and electric conductors leave the cable tray;

Figure 29 is a copy of a photograph showing the junction box at the exit of the cable tray and the connections of the cables and electric conductors in this box;

Figure 30 is a copy of a photograph showing the end of the cable tray remote from the supporting mast and the conduits passing through the cable tray;

Figure 31 is a copy of a photograph showing the manner in which fluid from the fluid conductor is distributed for flow to the cylinders controlling the component-assembly handling mechanism;

Figure 32 is a copy of a photograph showing predominantly the junction box in the trolley through which the electrical conductors are connected to the facilities on the trolley, including the control console;

Figure 33 is a view in side elevation of the inner mast of the mast assembly showing the manner in which the television camera and the light source are positioned on the gripper housing in the practice of this invention;

Figure 34 is a copy of a photograph of the end of the mast assembly showing this television camera and light source; and

Figure 35 is a diagram showing the manner in which the mast assembly is oriented by reference to the cross hairs on a television viewer tube in the practice of this invention.

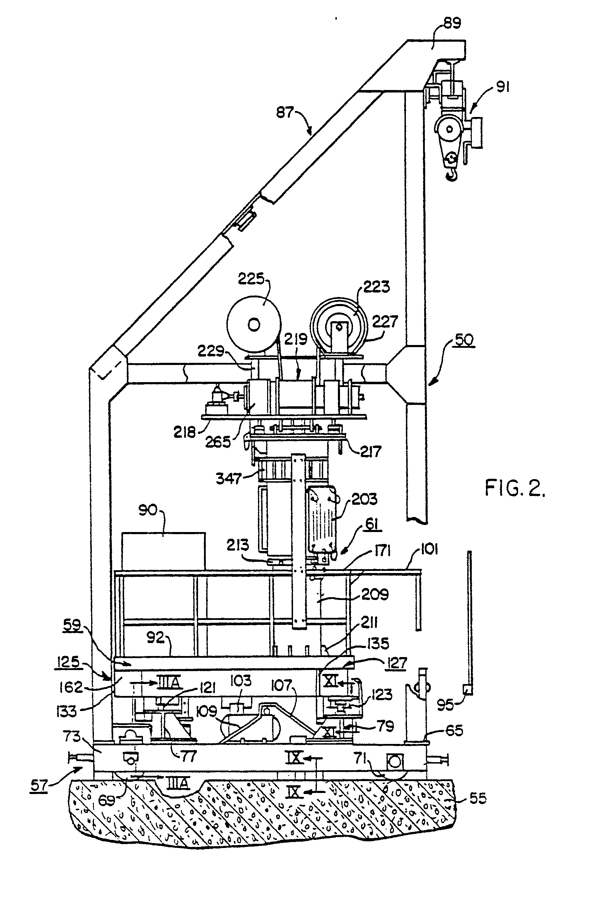

The apparatus 50 for refueling a nuclear reactor shown in the drawings serves to engage selected component assemblies of a nuclear reactor 51 (Figure 2), raise these components, transport them and lower them into a selected position. The general operation of this apparatus 50 and the purposes which it serves is disclosed in Swidwa. The reactor 51 is disposed under water 53, 20 or 30 feet in depth in a containment defined by massive walls 55.

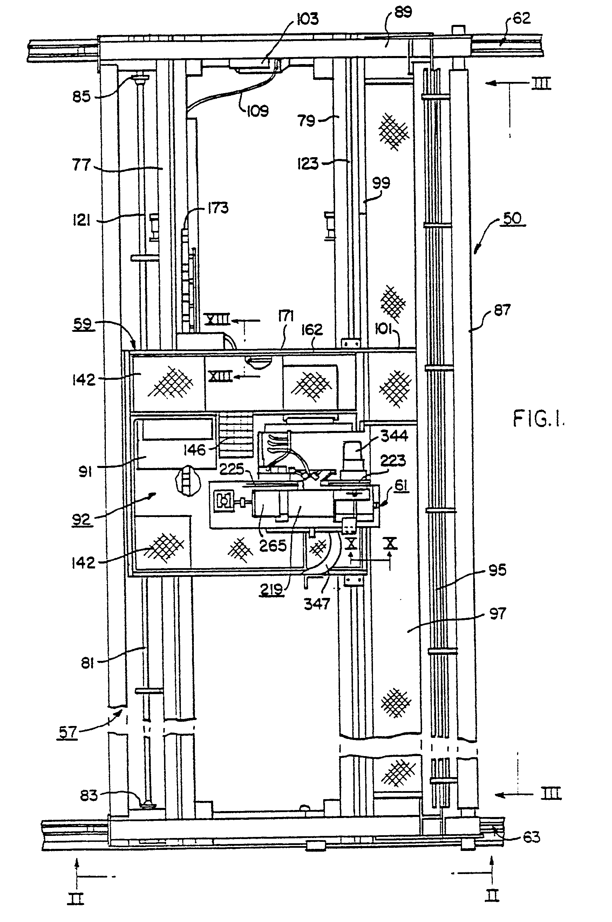

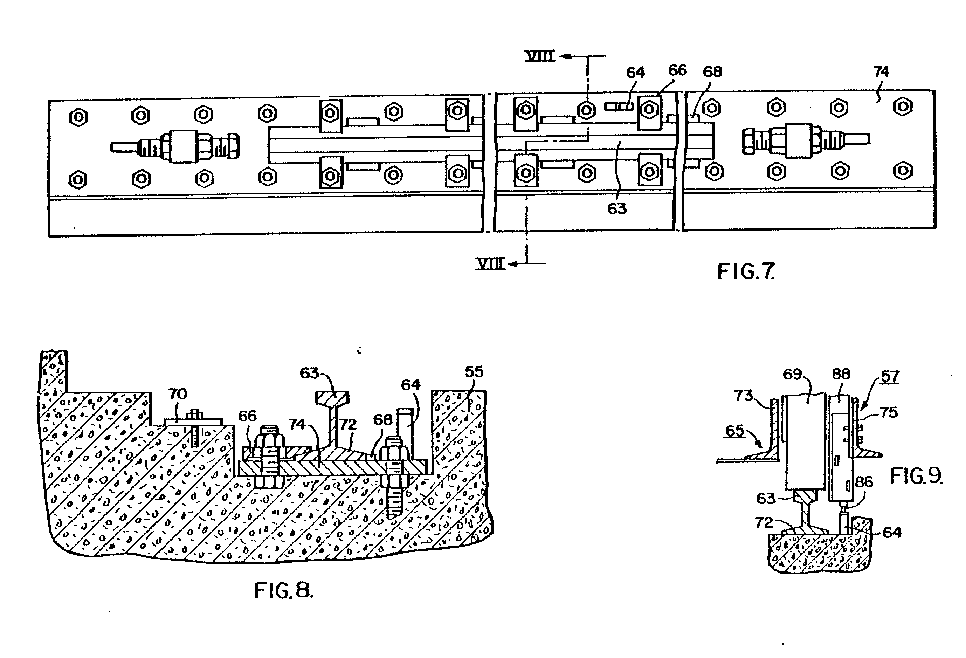

The apparatus 50 includes a bridge 57, a trolley 59 and a mast assembly 61 (Figures 1, 2, 3). The bridge is moveable on rails or tracks 62 and 63 (Figures 1, 7, 8, 9, 12). These tracks are similar except that track 63 has a position verification cam 64. The tracks 62 and 63 are supported on base plates 74 in slots on the tops of opposite walls 55 (Figure 8). Normally the slots are filled with grout. As shown for track 63 in Figures 7 and 8, each track is held down by rail clips 66 which engages a flange 72 along one side. Lateral movement is suppressed by a keeper for 68 along the opposite side. Indicator strip 70 extend along one side of track 63. The indications from the strips 70 are picked up by a television camera (not shown) on the bridge.

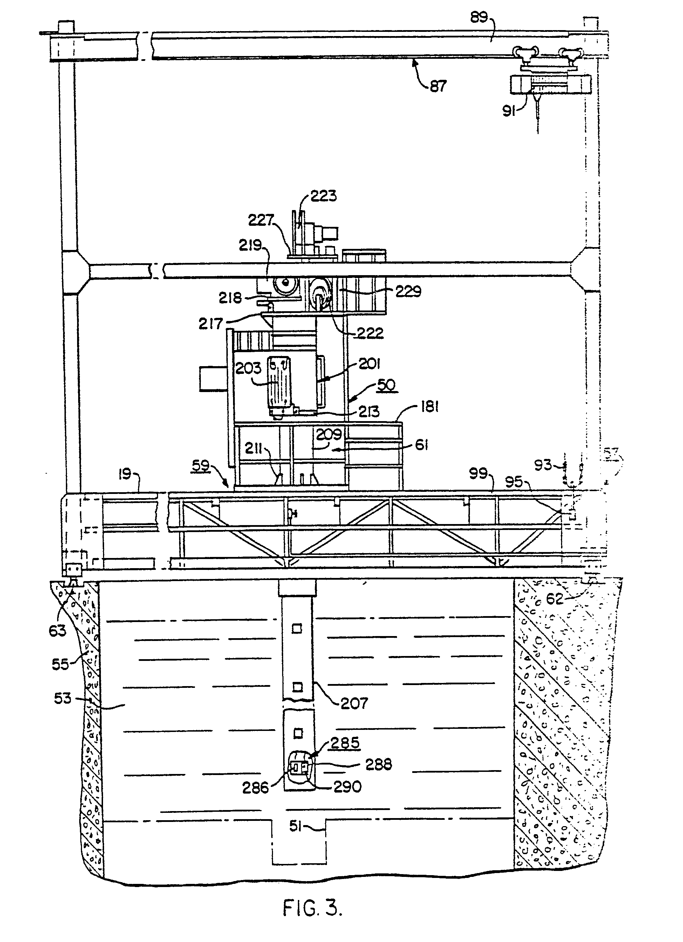

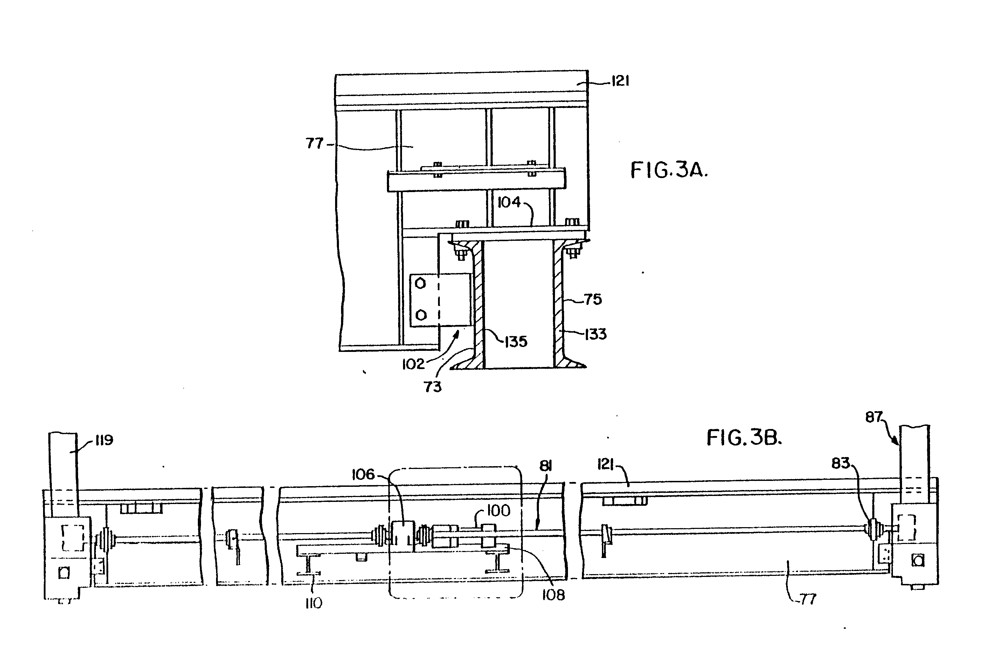

The bridge 57 includes trucks 65 and 67. Each truck has a driven wheel 69 and an idler wheel 71 on shafts extending between back-to-back channels 73 and 75. I-beams 77 and 79 interconnect the trucks 65 and 67. I-beam 77 is adjacent the driven wheels 69. The channels 73 and 75 extend through cut-outs 102 of each beam 77 and 79. Plates 104 welded to the webs of the I-beam are bolted to the upper flanges of the channel. Figure 3A shows this structure for I-beam 77 which is adjacent the driven wheels 69.

The wheels 69 are driven by motor 100 through speed reducer 106 (Figure 3B). The motor 100 and speed reducer 106 are mounted on a bracket 108 welded to the web of I-beam 77 and supported on small I-beams 110 welded to I-beam 77.

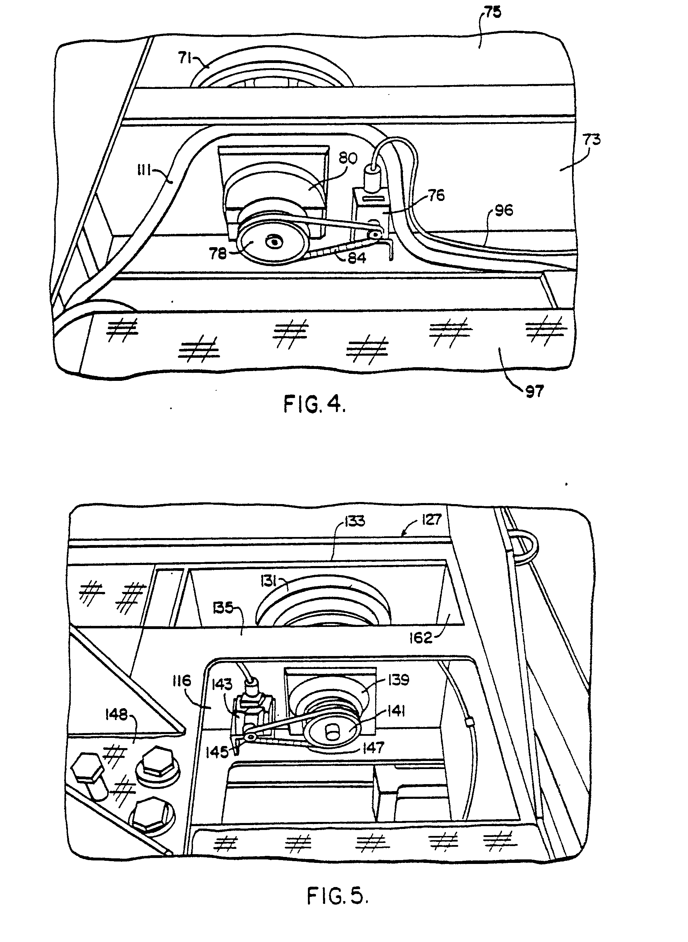

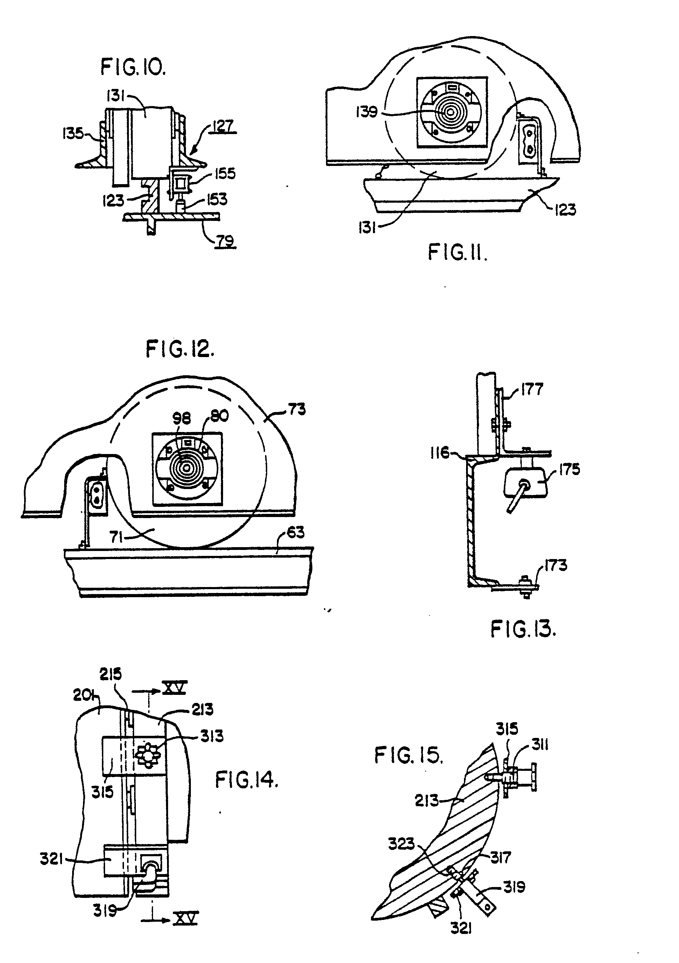

The motor 100 drives shaft 81 (Figure 1) whose sections are connected through couplings 83 and 85 to pinions (110A). Each pinion engages a gear (112) on driven wheel 69. Wheels 69 are rotatable on sleeve bearings (not shown) on their shafts. Wheels 71 are secured to their shafts 98. The shafts 98 are rotatable on bearing cartridges 80 (Figures 4, 12) which are journaled in the channels 73 and 75.

One idler wheel 71 drives a pulse generator or pulser 76 (Figure 4) which produces pulses that measure the movement of the bridge 57 from a reference position. A pulley wheel 78 is keyed to the shaft 98 with which one of the wheels 71 is rotatable on bearing 80. Pulley wheel 78 drives a second pulley wheel 82 of very much smaller diameter than 78 through a timing belt 84. The pulser 76 produces pulses at a far higher rate than the rate of rotation of the wheel 71. The position of mast assembly 61 along tracks 63 and 65 is measured by the number of pulses produced by the pulser 76 as the mast assembly moves from the reference position to the position in question.

A verification limit switch 86 is supported on a bracket 88 suspended from channel 75 (Figure 9). The limit switch 86 is actuable by the position verification cam 64 when the bridge 57 passes over the cam. Initially the apparatus is calibrated so that the position of the cam 64 corresponds the number of pulses produced by pulser 76 as the bridge moves from the reference position to the position of the cam.

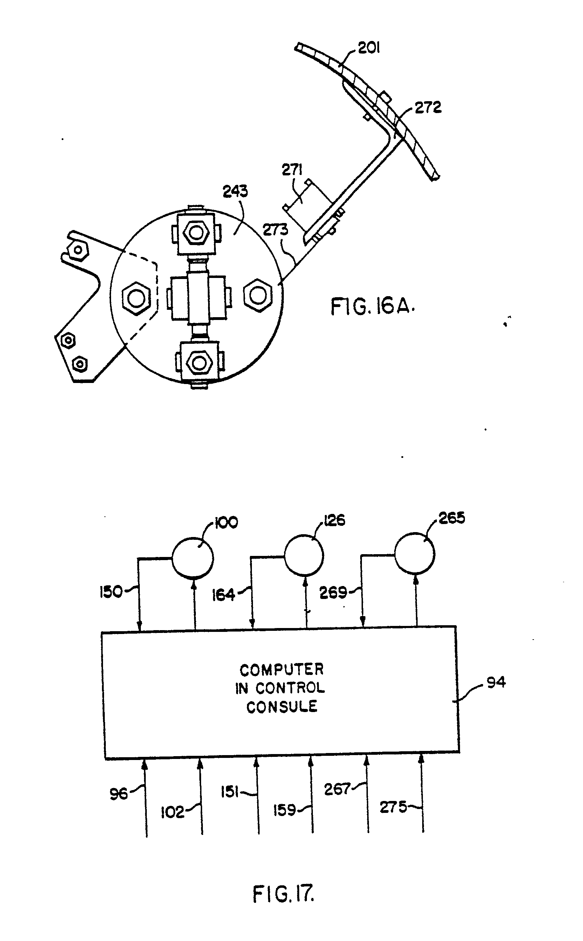

A control console 90 is mounted on the trolley deck 92. The console includes a computer 94 (Fig. 17) with a memory. The pulser 76 is connected to the computer through conductor 96. The count of the train of pulses from the reference position to any position of the bridge 57 is entered in the computer. Through line 150, the computer receives intelligence of the direction of movement of the bridge and it is programmed to add to the number of pulses if the direction is forward from the reference position and to subtract from the number of pulses if the direction is backward. The intelligence of actuation of limit switch 86 is also entered in the computer 94 through conductor 102. The calibrated count corresponding to the actuation of switch 86 is also entered in the computer. The computer is programmed to correct the calibration if the actual count deviates from the calibrated count.

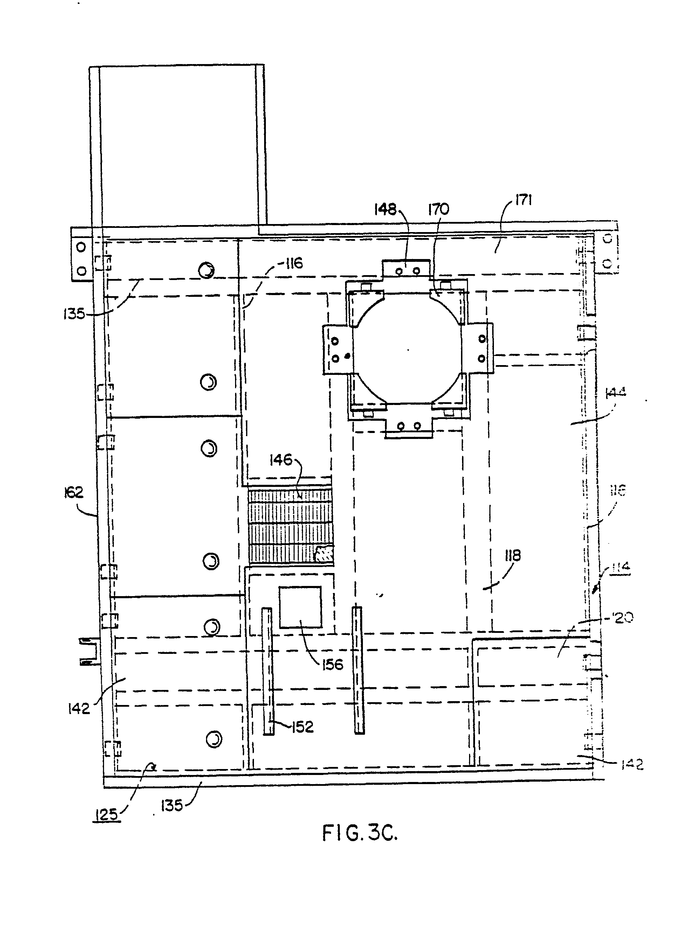

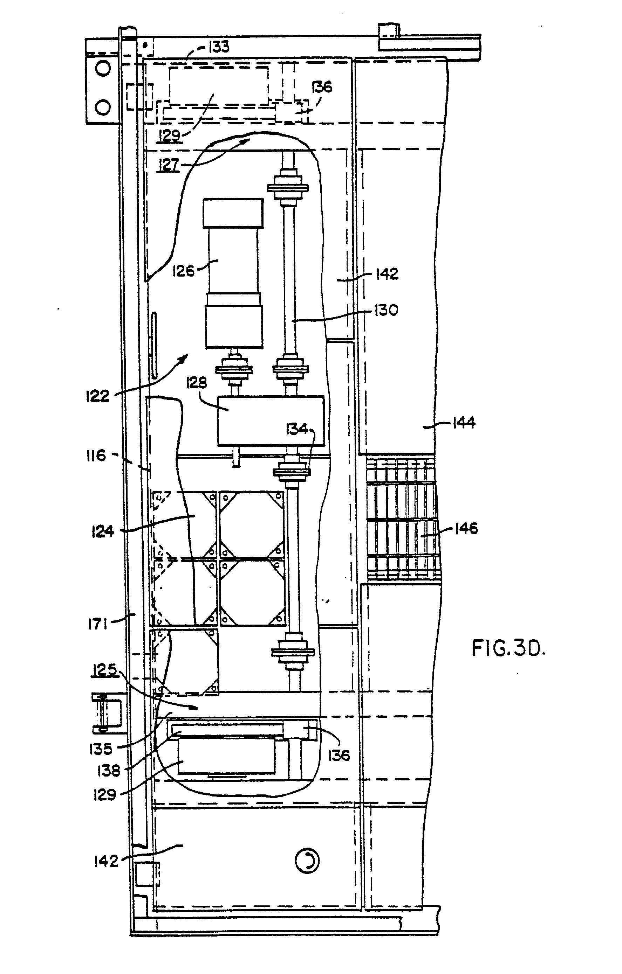

A frame-like super structure 87 is bolted to the trucks 65 and 67 of the bridge spanning the trucks. The super structure 87 has an overhang 89 at the top which carries a hoist 91 for tools. The hoist 91 may be moved between the opposite walls 55 of the pit by a chain 93 (Figure 3). It may be operated by a pushbutton switch 95 suspended from the hoist. Power is supplied to the hoist 91 by power track 95. Some of the tools which are used with hoist 91 are operated by compressed air. The bridge 57 is provided with a walkway 97 on one side. A safety fence 99 extends along the walkway on the side of the pit. The safety fence 99 has handrails 101 in the center permitting personnel to step safely from the trolley 59 to the walkway.

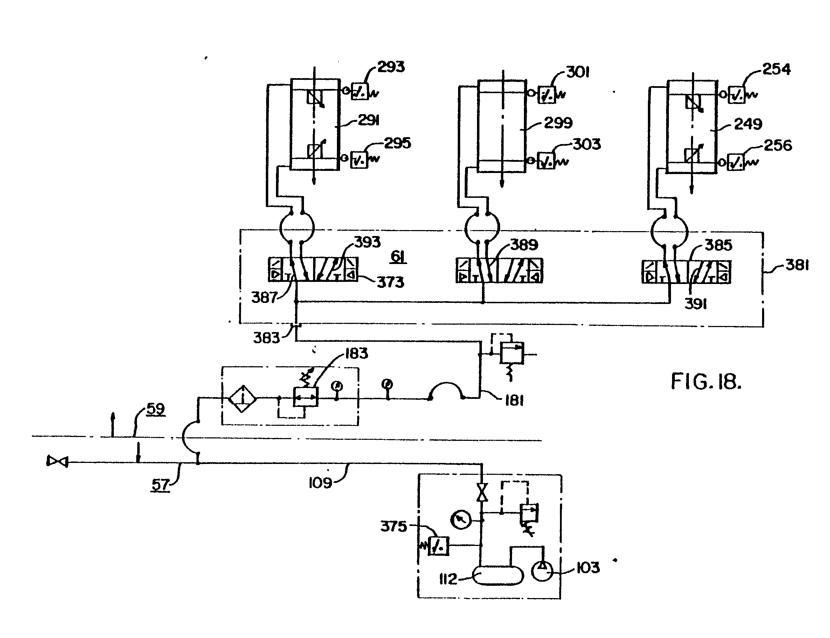

While the fluid for driving the fluid operable means may be of any type, the fluid typically used in the practice of this invention is compressed air. An assembly including a compressor 103 and a tank 112 and associated switch means and relief valves (Figure 2, see also Figure 18) is mounted on truck 65 of the bridge 57 to supply the compressed air. Air may be selectively supplied to the tools on hoist 91 through air hose 107 and by air hose 109 to the trolley 59 for the air-operated devices on the mast 61.

The apparatus 50 is supplied with power from a power outlet (not shown) on the containment through a conductor 111. Between the outlet and the bridge 57 the power line includes a plurality of festoon loops (not shown).

The trolley 59 is moveable on tracks or rails 121 and 123 on I-beams 77 and 79. Like the bridge 57 the trolley 59 is moveable along tracks 121 and 123 on trucks 125 and 127. Each truck has a driving wheel 129 (Figure 3D) and an idling wheel 131 (Figures 10, 11). Each pair of wheels is suspended from back-to-back channels 133 and 135. Each driven wheels 129 is rotatable on sleeve bushings on a shaft supported between a pair of channels 133 or 135, 133 in the outside and 135 on the inside.

The channel units 133—135 are strengthened by gussets 162. The supporting structures of the trolley 59 is a frame 114 formed of additional channels 116 I-beams 118 and plates 120 (Figure 3C) welded to the channels 135 or 137 of the trucks 125 and 127. A long plate or platform 122 (Figure 3D) is welded to the lower ends of the channels 133, 135, and 116 along the side 162 of the trolley 59 from which the driving wheels 129 are suspended. This plate carries the drive for the wheels 129 including a transformer 124, a motor 126 and speed reducer 128. The drive shaft 130 formed of sections connected by couplers 134 extends from the speed reducer 128. At its ends the drive shaft 130 is connected to pinions 136 which drive gears 138 connected to the wheels 129. The motor is controlled from the computer 94 and feeds back its direction of rotation to the computer through line 164. At the top the frame 114 is covered by doors 142 and removeable plates 144 which form the deck 92. The deck is provided with a grating 146 through which the pit under the trolley 59 may be viewed. The deck also has pads 148 (Figure 3C) for supporting the mast assembly 60. Doors 170 are interposed between the pads 148. There are also supports 152 for the control console 90. There is an electrical junction box 154 (Figure 32) under the trolley which is accessible through a hole in the deck 92 by removing grating 146.

Each idling wheel 131 is rotatable with a shaft 137 on bearing cartridges 139 supported by a channel 133 or 135. A toothed pulley wheel 141 (Figure 5) is keyed to the shaft 137 of one of the idling wheels 131. This pulley wheel 141 drives a pulse generator or pulser 143 through a pulley wheel 145 of much smaller diameter through a timing belt 147. The pulser 143 is connected to computer 94 through conductor 151.

A verification cam 153 (Figure 10) is mounted at a predetermined position along track 123. A verification limit switch 155 is mounted on a bracket 157 suspended from the channel section 133. The limit switch 155 is positioned to be actuable by the cam 153 when the trolley passes over the position of the cam. The actuation of the limit switch 155 is entered in computer 94 (Figure 17) through line 159.

The cooperation of the pulser 143, the limit switch 155 and the computer 94 is similar to the cooperation in the case of the like components of the bridge 57. The number of pulses in a pulse train produced by pulser 143 as the trolley moves from a reference position to a given position along the tracks 121 and 123 measures the displacement of the given position from the reference position. The counts of pulses by the computer 94 is positive when the trolley 59 moves forward, away from the reference position, and negative when the trolley moves backward, towards the reference position. There is a one-to-one relationship between the count of positive pulses and each position of the trolley 59. The apparatus is calibrated so that the position of cam 153 on track 123 corresponds to a predetermined number of pulses which are entered in computer 94. If the calibration is impaired, there is a deviation between the number of pulses counted by the computer between the reference position and actuation of switch 155 and the entered calibration count. The computer is programmed to make a correction.

A handrail 171 extends around the trolley deck 92. Adjacent the track 121 along the I-beam 77 there is an indicator strip 173 (Figure 1). This strip carries indications of positions along the pit in the direction of track 121. The indications on strip 173 are picked up by a television camera 175 (Figure 13) suspended from a bracket 178 secured to the trolley 59. By viewing the screen of the viewer tube (not shown) on the control console 90, which is connected to camera 175, the operator can determine at first hand the approximate position of the trolley along the pit.

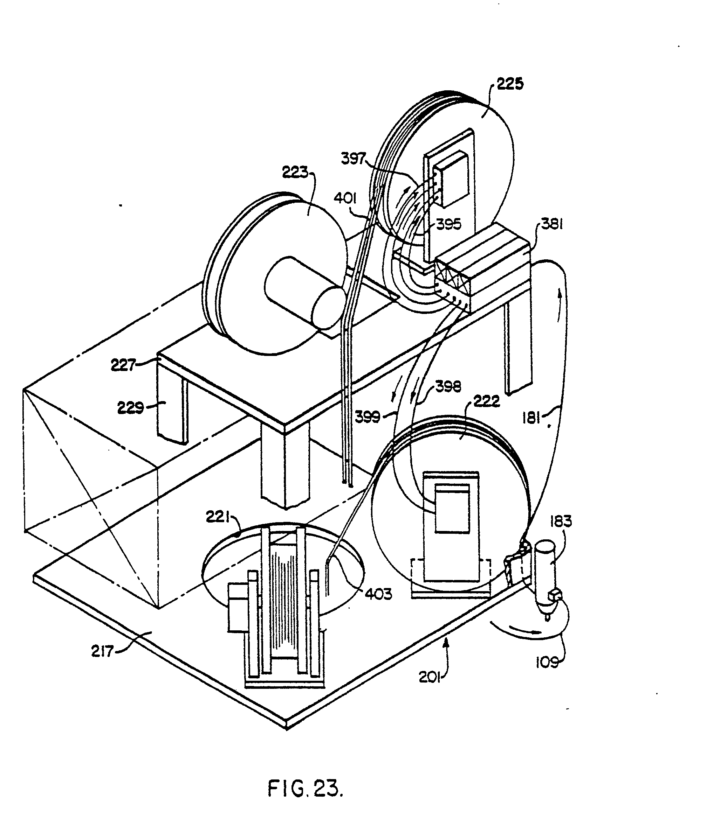

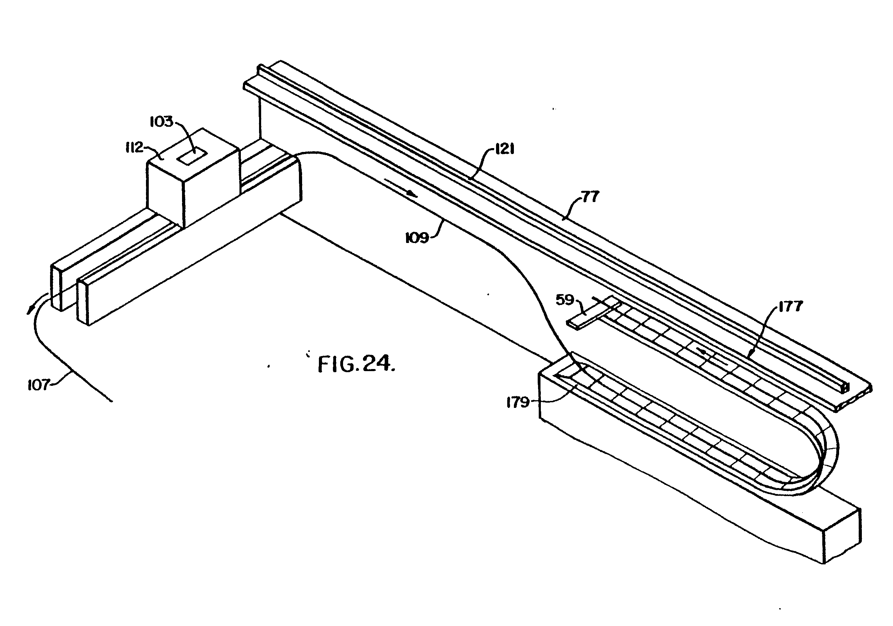

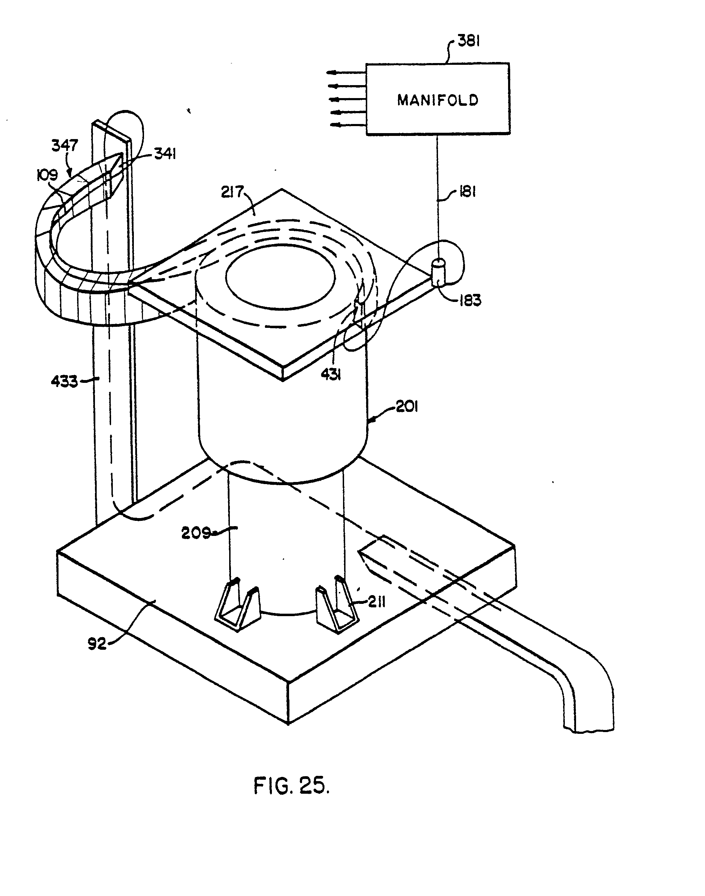

A cable tray 177 (Figures 5A, 24) is connected at one end to a plate 179 suspended from I-beam 77 and at the written end to the underside of trolley 59. The slot of the cable tray 177, which carries the cables is horizontal. The cable tray carries the compressed-air hose 109, the power conductor 111, (Figure 4), and the conductors from the verification switch 86 (Figure 9) on the bridge 57, the pulser 76 (Figure 4) on the non-driven wheel 71, and the television camera (not shown). The cable tray 177 permits the bridge 57 and trolley 59 to travel relative to each other without disturbing the cables on the trolley side. Except for the compressed-air hose 109, the conductors on cable tray 177 are connected to the junction box 154 under the bridge and thence are connected to the console 90. The hose 109 is connected to the hose 181 on the mast assembly 60 through pressure regulator 183 (Figures 23—25). Conductors powered by line 111 also are connected from the junction box 154 to facilitate on the mast assembly.

The mast assembly 61 is described in Swidwa. For any information in addition to that presented here that may be of interest, reference is made to Swidwa.

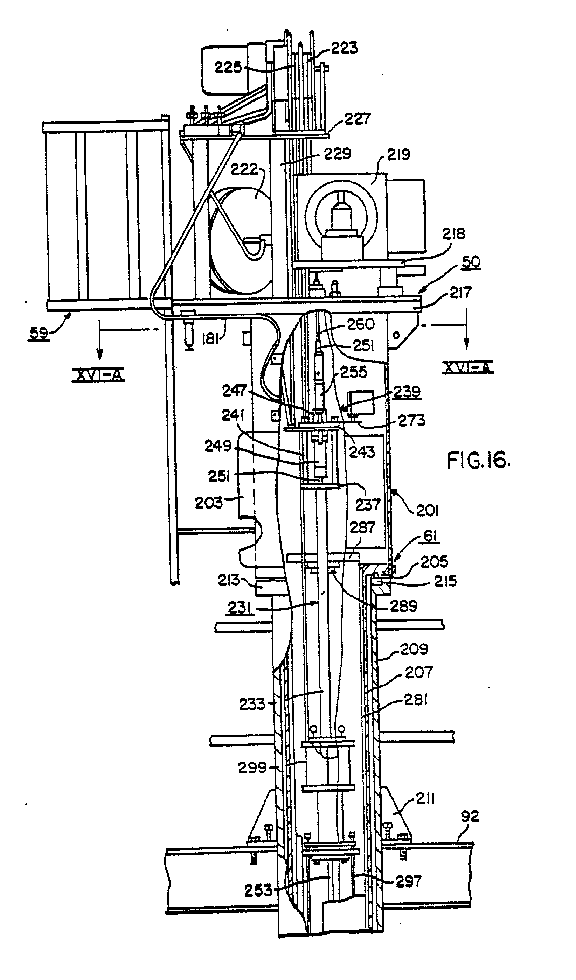

The mast assembly 61 includes a supporting mast 201 (Figures 2, 3, 16) of circular cross-section. The supporting mast 201 has windows 203 (Figures 2, 16) through which the operation of the parts within the mast 201 may be observed.

The supporting mast 201 is secured to ring 205 (Figures 15, 16) from which a long guiding mast 207 of circular section extends. The apparatus also includes an auxiliary mast or bearing mast 209. Brackets 211 extend from the auxiliary mast 209 near its lower end. These brackets engage the bracket pads 148 (Figure 3C) and the deck 92 of the trolley 57. The auxiliary mast 209 has a flange 213 at the top which carries a thrust-bearing ring 215. The ring 205 has a seat for the bearing ring 215, supporting mast 201 and the ring 205 and guiding mast 207 and other parts supported from the supporting mast are rotatable on the bearings 215. The supporting mast 201 has a rectangular flange 217 at the top.

There are supported directly on this flange 217 a platform 218, on which a winch 219 (Figures 2, 16, 23) is mounted, and an electric conductor reel 221 and an air-hose reel 222. An additional reel 223 for electric conductors and an additional air-hose reel 225 supported from a platform 227 mounted on legs 229 on flange 217 (Figure 23). An elongated member 231 having at its lower end, grapples (not shown) for engaging a control-rod cluster (not shown) or a thimble-plug cluster (not shown) of the reactor 51 to be refueled, are moveable upwardly or downwardly by the winch 219. The elongated member 231 includes a tube 233 (Figure 16) to the upper end of which a plate 237 is secured. The plate 237 is formed into a rigid mechanical unit with an upper-plate assembly 239 by four support rods 241. The rods 241 engage plate 237, and are secured by nuts to the plate 243 of the upper-plate assembly. The flange 245 of a yoke 247 engages the plate 237 and carries a cylinder 249, typically an air cylinder at its other end. The flange 245, plate 237 and cylinder 249 are connected together as a rigid unit. The piston rod 251 of cylinder 249 actuates a rod 253 to move upwardly or downwardly in the tube 233. When actuated to its utmost down position, the rod 253 causes the grapple (not shown) to engage the control rod assembly or thimble-plug assembly which is to be raised. In the up position of the rod 253, the grapple may be disengaged from the component assembly. Limit switches 254 and 256 (Figure 18) are provided for signaling that the piston rod 251 is at its extreme positions. The yoke 247 is pivotally connected to the lower junctions of swivels 255. The upper junction of each swivel 255 is pivotally connected to a clevis 257. Each clevis 257 is suspended from a threaded member 259 at the end of a cable 261 from the winch 219.

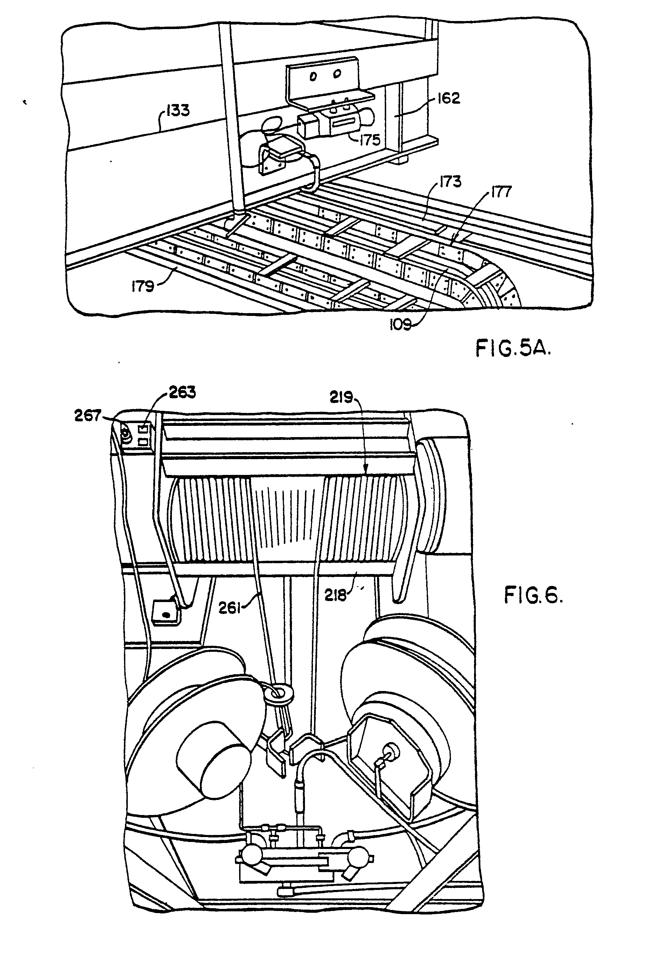

The winch 219 is provided with a pulse generator 263 (Figure 6) which is actuable by a toothed member (not shown) driven by the winch motor 265 synchronously with the winch. The pulser 263 operates analogously to the pulsers 76 and 143, to produce trains of pulses whose number measures the height of the elongated member 231. The numbers of pulses are entered in the computer 94 through line 267 (Figs. 6, 17). The winch motor 265 is controlled from the computer 94 and enters its direction of rotation in the computer through line 269. The numbers of pulses are entered in a positive sense when the elongated member 231 moves downwardly and in a negative sense when the mast moves upwardly so that there is a one-to-one relationship between the position of the member 231 and the net number of pulses entered in the computer 94. The apparatus may be calibrated so that the position of the elongated member for each number of pulses is known. A calibrated verification limit switch 271 is suspended from a bracket 272 of the supporting mast 20 (Figures 16, 16A). The switch 271 is actuable by a bar 273 on the switch which is in turn actuated by the plate 243 of the upper plate assembly 274 when the bar 273 is at the level of switch 271. The actuation of switch 271 is entered in the computer 94 through line 275. The computer is programmed to check if the indicated position of the limit switch 271 corresponds to the calibration of the elongated member position and to correct the calibration if there is a deviation.

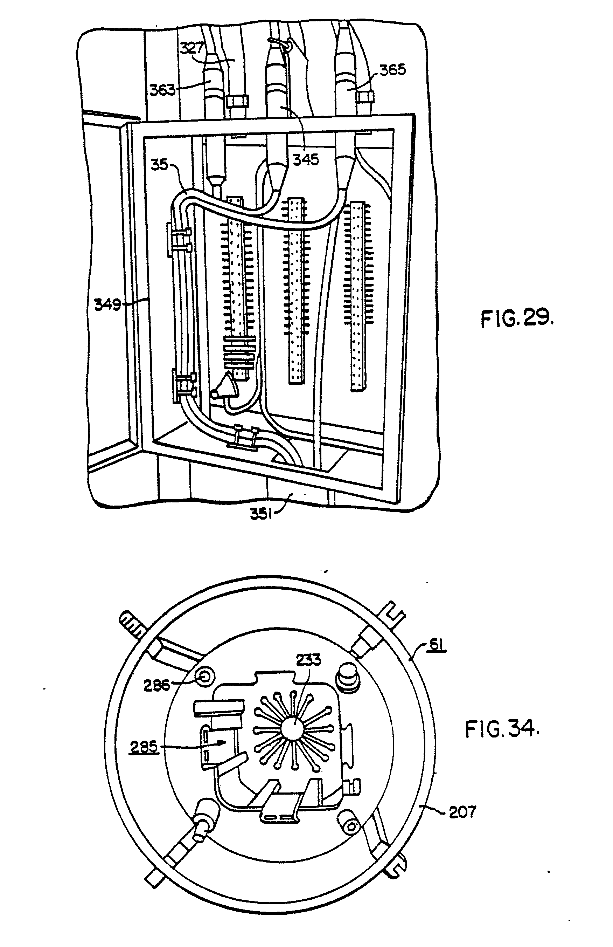

The mast assembly also includes an inner mast or gripper mast 281. This mast 281 is of generally rectangular cross section composed of oppositely disposed channels formed into a rigid unit by cross snow-flake plates, as shown in detail in Swidwa. The inner mast carries a gripper 285 for engaging a fuel assembly 284. A television camera 286 (Figures 3, 34), light source 288 and reflector 290 are mounted on the end plate 292 of the gripper assembly. The reflector 290 is so set as to illuminate the region of a component assembly, for example, 284 to be viewed by the camera. The top plate 287 of the inner mast 281 has an opening which may be constricted by a yoke 289 pivotally suspended from plate 287. The yoke 289 is moveable by an air cylinder 291 (Figure 18) on plate 287 from a closed position, in which it constricts the opening, to an open position in which it does not constrict the opening. The tube 233 of the elongated member 231 carries lugs (not shown). The lugs can pass through the opening with the yoke 289 in open position and engage the yoke 289 when it is in the closed position. With the yoke in the open position, the elongated member 231 alone is moveable upwardly by the winch 219. This occurs when only a control assembly or thimble-plug assembly is to be raised. With the yoke closed, the inner mast can rest on the lugs or can be raised when the elongated member 231 is raised by the winch. The latter event occurs when a fuel assembly is to be raised. Limit switches 293 and 295 (Figure 18) are provided for cylinder 291 to signal the extreme positions of this cylinder.

The gripper assembly 285 is actuable to engage or disengage a fuel assembly by rods 297. The rods 297 are moveable upwardly and downwardly by a hollow cylinder 299 (Figures 16, 18) through which the tube 233 passes. The extreme positions of the cylinder 299 are signalled by limit switches 301 and 303.

The supporting mast 201 may be locked in an initial position by a locking screw 311 (Figures 14, 15) operated by knob 313. The screw 311 and knob 313 are suspended from bracket 315 secured to the mast 201. When the knob 313 is turned the screw tip 317 penetrates into a hole in the flange 213 of the auxiliary mast 209. In the initial position of the supporting mast 201, the plunger 317 of a limit switch 319, supported from a bracket 321 in mast 201, is held in a predetermined setting by a cam 323 in the flange 213. When the mast 201 is rotated, this switch 319 is actuated.

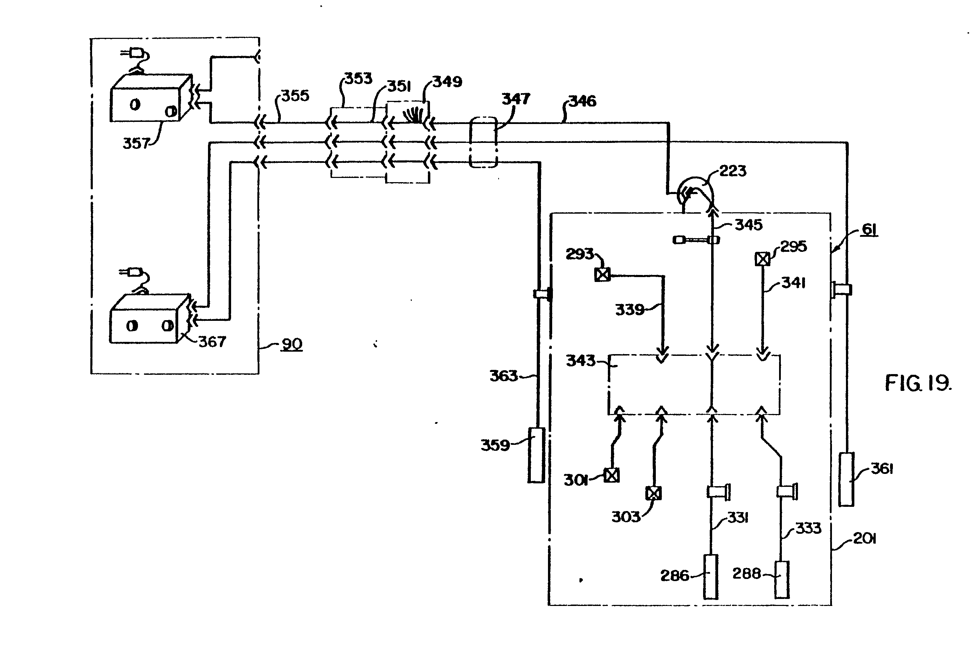

The disposition of electrical conductors on the mast assembly 61 in the practice of this invention will now be discussed with reference to Figure 19. The heavy black lines in Figure 19 each represents a cable or harness including a number of wires. The following cables are connected to parts which are moveable up or down with the elongated member 231 or the inner mast 281:

The cable 331 from the television camera 286;

The cable 333 from the light source 288;

The cable 335 from the limit switch 301 associated with gripper cylinder 299;

The cable 337 from the limit switch 303;

The cable 339 from the limit switch 293 associated with cylinder 291 for the yoke;

The cable 341 from the limit switch 295.

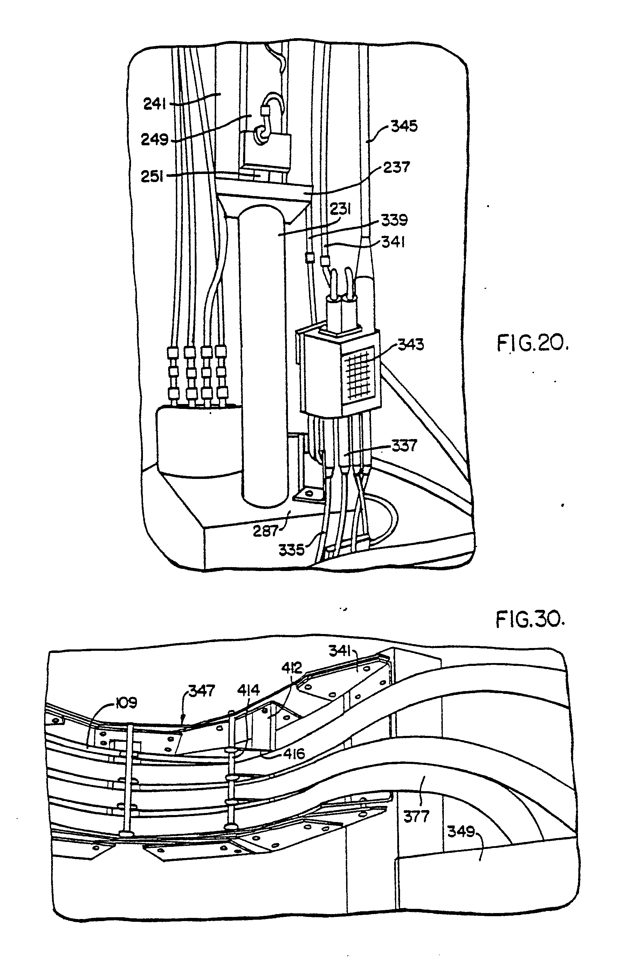

These cables 331 through 341 are connected to the input terminals of junction box 343 (Figure 20) which is mounted on the plate 287 of the inner mast 281. The output cable or harness 345 from box 343 which includes conductors carrying the current of all input conductors is wound on cable reel 223. The conductors are connected through a slip ring system 344 (Figure 1) to cable section 346. Cable section 346 passes through an additional cable tray 347 to junction box 349. Cable section 351 from the junction box 349 passes through wire way 353 to the junction box 154 (Figure 32) under the deck 92 of the trolley 59. Cable section 355 from this junction box 154 is connected to a rack 357 in the control console 90. Television cameras 359 and 361 are mounted on guiding mast 209. Since this mast is not moveable, cables 363 and 365 for these cameras are connected directly, and not through a reel, to a rack 367 of console 90 through cable tray 347, junction box 349, wire way 353 and intermediate cable sections.

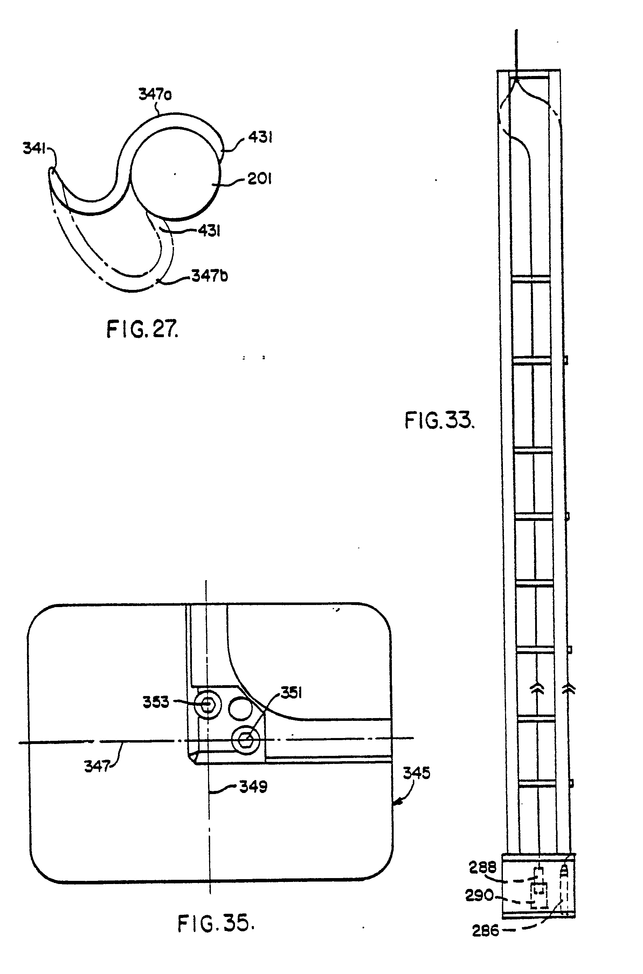

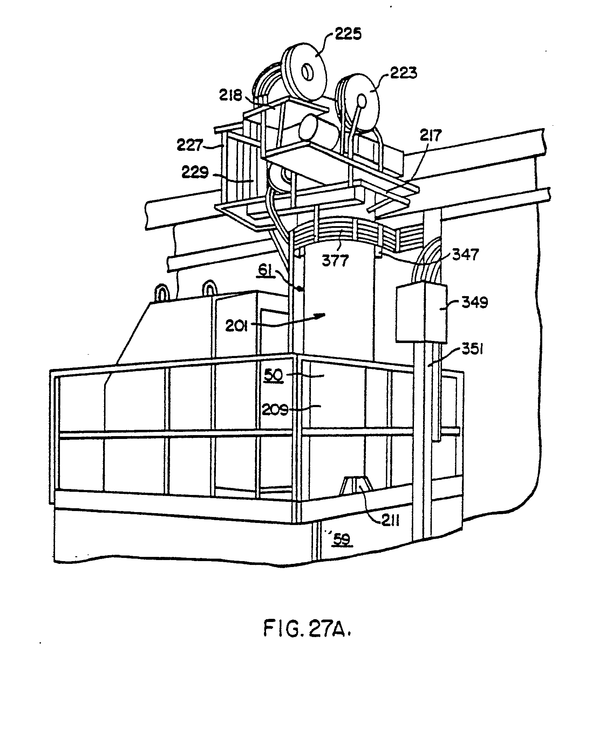

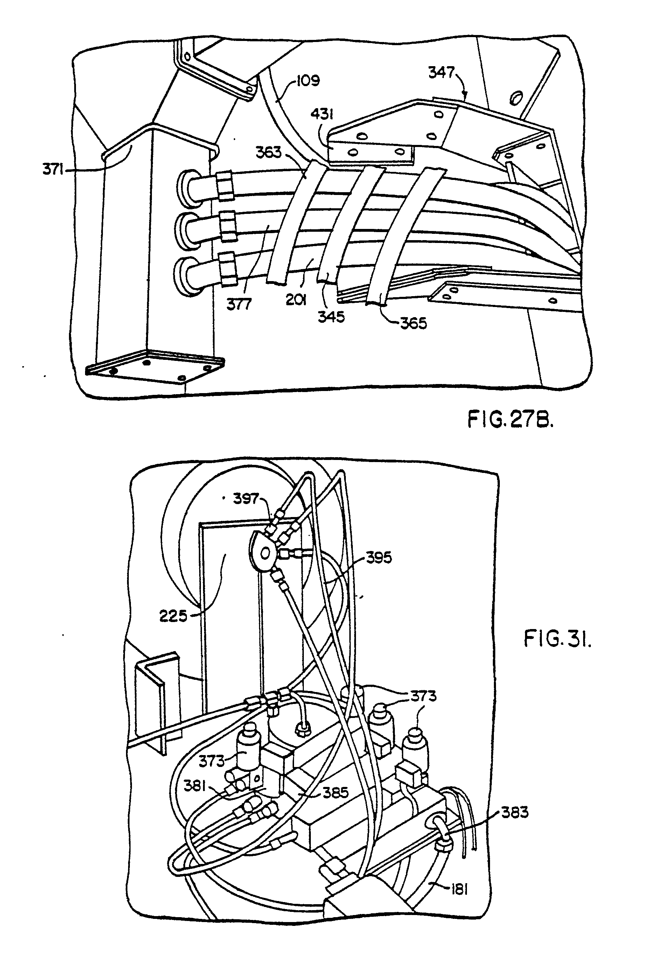

The cable from limit switches 254 and 256 for the cylinder 249 which controls the movement of the elongated mast 231 is wound on reel 221 (Figure 23). The cable from the slip ring (not shown) of this reel 221 and the conductors from the following components are passed through a Y wireway 371 (Figures 23, 27B) whence they pass through cable tray 347 in conduits 377.

The solenoids 373 (Figure 31) for the valves which control the flow of compressed air to the cylinders 249, 291, 299 (Figure 18).

The pulser 263 measuring the height of the elongated member 231.

The limit switch 271 which verifies the calibration of the height of the elongated member:

The winch motor 265;

The pressure switches 375 (Figure 18) on the compressed air line 109;

Limit switch 319 (Figures 14, 15) signalling displacement of supporting mast 201 from its initial position.

These conductors are combined in conduits 377 connected to the Y wire way 371. The conduits pass through the cable tray 347 to the junction box 349 where they are connected to conductors which pass through wire way 353 and to junction box 154. At this junction box 154 the conductors are appropriately connected to the console.

The conductors from the pulsers 76 (Figure 4) on the bridge 57 and 143 (Figure 5) on the trolley 59 are connected directly to the junction box 154 and thence to the control console 90. The verification limit switches 86 (Figure 9) operated by the bridge and 155 (Figure 10) operated by the trolley are likewise connected to the control console through junction box 154.

The compressed air is distributed to the cylinders 241, 291, 299 through a manifold 381 (Figures 18, 25, 31). The hose 181 is connected to the input 383 of the manifold. The outputs of the manifold are delivered through valves 385 (Figures 18, 31), each of which is actuable by a solenoid 373. The valves 385 remain in the last position to which they are actuated. If solenoid A (Figure 18) is last actuated, the flow is as shown in Figure 11 into the upper terminal of a cylinder and out at the lower terminal as represented by arrows 387 and 389. If solenoid B is last actuated, the flow is into the lower terminal and out of the upper terminal as represented by the arrows 391 and 393. Four of the output hoses 395 are connected to inputs 397 of the upper hose reel 225. Two of the output hoses 398 are connected to the inputs 399 of the lower reel 222. The hoses 401 extending from the peripheral output of reel 225 supply compressed air selectively to the cylinder 299 for operating the grippers and to the cylinder 291 for operating the yoke 289 on the inner mast 281. The two peripheral hoses 403 from reel 222 supply compressed air selectively to operate the cylinder 249 for moving the rod 253 in tube 233.

The reels are procured from Aero Motive Manufacturing Co. of Kalamazoo, Michigan. Typical reels 221 and 223 for electrical conductors are identified as Catalogue No. 56269—147. Typical air hose reels are identified as Catalogue No. D70A—40.

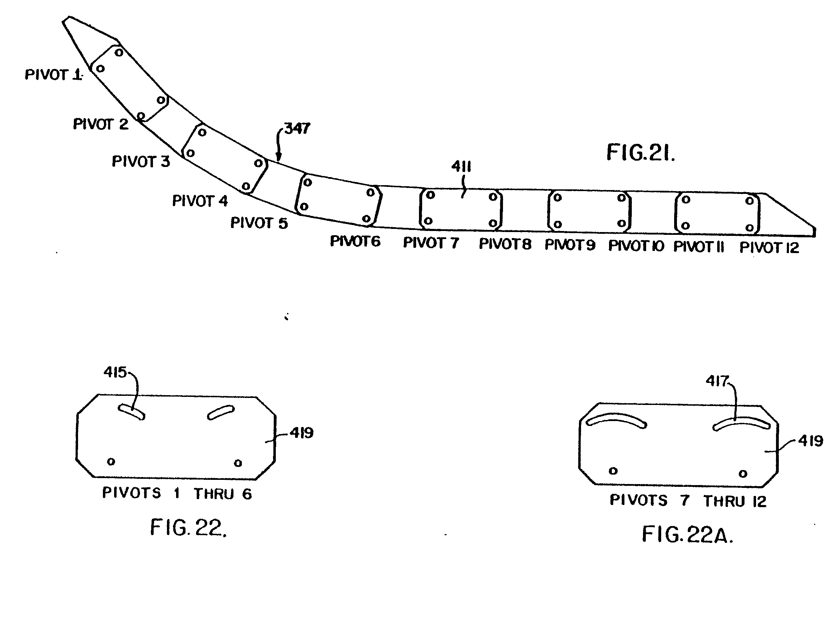

A typical cable tray 347 is shown in Figures 21, 22, 22A. The tray is composed of oppositely disposed pairs of plates 411 jointed by cross bars 412 (Figure 27A). The plates on each side engage in slots 415 and 417 in pivot plates 419 and 421. The slots 415 for pivots 1 through 6 are shorter than the slots 417 for pivots 7 through 12. Between the plates a slot is formed for containing cables, conductors or conduits. Opposite the bars 412 there are rods 414 (Figure 30) from which plates 416 for separating cables or conduits extend inwardly towards the bars 412. The plates 411 and the bars 412 define slots through which the cable, hose and conduits extend.

The cable tray 347 is mounted with its slot or trough through which the cable, conduit or hose extends vertically. At the end 431 where the wires from wire way 371 enter the conduits 377 on the cable tray, the tray is connected to the supporting mast 201. From this end the tray extends part way peripherally around the mast. It then departs from the mast to a position spaced from the mast where the junction box 349 is mounted on a long angle 433 extending from the end of the cable tray to the trolley 59. When the mast 201 is turned in one direction, clockwise with reference to Figure 27, the cable tray is wound on the mast 201 as shown at 347a. The cable tray then has the configuration of an S. When the mast 201 is turned in the opposite direction, counterclockwise, the cable tray unwinds from the mast as shown at 347b. In either event the cables, conduits and hose at the end 341 of the cable tray are not moved.

The winch 219 and its cables 259, and the reels 221, 222, 223 and 225 and their cables and hoses are mounted on supporting mast 201 and are rotatable with the mast. The cables 259 and hose and electric cables do not become twisted or interfere with each other.

The television camera 286 produces an image 343 of a portion of the fuel assembly 284 on a television monitor 345 (Figure 35) in the control console 90. The monitor has cross hairs 347 and 349. The moving parts of the mast assembly and the camera are oriented by moving the bridge and/or trolley so that the cross hairs are in a predetermined position with reference to selected parts of the fuel assembly. As shown in Figure 35, the mast and camera are set so that the images 351 and 353 of the bolts which secure the springs of the upper nozzle are intersected.

**Claims**

1. Apparatus for refueling a nuclear reactor disposed in a containment, said apparatus including a mast assembly (61) for engaging, raising and lowering selected ones of component assemblies of said reactor, a trolley (59) supporting said mast assembly (61) and having means for raising or lowering said mast assembly (61), a bridge (57) movably supported above said reactor and having a first track (121, 123) thereon for said trolley (59), first drive means (100, 106) connected to said trolley (59) for moving said trolley (59) forward and backward along said first track (121, 123), a second track (62, 63) on said containment (55) for said bridge (57), second drive means (126, 128, 130) associated with said bridge (57) for moving said bridge (57) forward and backward along said second track (62, 63), said first and second tracks (121, 123, 62, 63) extending along non-parallel paths, so that movement of said bridge (57) along said second track (62, 63) causes movement of said mast assembly (61) in a first direction and movement of said trolley (59) causes movement of said mast assembly (61) in a second direction, said mast assembly (61) including a supporting mast (209) rotatably mounted on said trolley (59) for engaging, raising and lowering component assemblies, electrical operating means associated with said supporting mast and on said engaging-raising-and-lowering means for operation thereof and electrical facilities supported on said trolley (59) and connected by electrical conductors (341) to said electrical operating means, characterized by a flexible cable tray (347) connected to said supporting mast (209) at one end, extending from said one end peripherally at least partly around said mast (209) and thence departing tangentially from said mast (209) and terminating at the opposite end a predetermined distance from said mast (209) so that, when said mast (209) is rotated in one direction, said tray (347) is wound peripherally on said mast (209) and when said tray (347) is rotated in the opposite direction, said tray (347) is unwound peripherally from said mast (209), said conductors (331—339), in passing between said electrical operating means and said facilities, extending through said cable tray (347), the conductors (331—339) following the winding and unwinding of said tray (347), whereby the portions of said conductors extending away from said tray from said one end and from said opposite end are not affected by the rotation of said supporting mast (209).

2. An apparatus as claimed in claim 1, characterized in that fluid-pressure operable means (249) are mounted on the supporting mast (209), a pressure-fluid supply means (103) is mounted on the bridge (57), and a fluid conductor (109) is provided connecting said pressure-fluid-supply means (103) to said fluid-pressure operable means (249), said fluid conductor (109) passing from said presure-fluid-supply means (103) to said fluid-operable means (249) through the cable tray (347).

3. An apparatus as claimed in claim 1 or 2, characterized in that said cable tray (347) is mounted on the supporting mast (209) so that the flexible sides are aligned generally vertically one above the other.

4. An apparatus as claimed in claim 1, 2 or 3, characterized in that the portion of the fluid-conductor (109) between the bridge (57) and the cable tray (347) is connected to the trolley (59) at a position between the bridge (57) and the cable tray (347), and an additional cable tray (177) is connected at one end to the bridge (57) and at the opposite end to the trolley (59), said conductor (109) passing through said additional cable tray (177), whereby the portion of said conductor (109) between said fluid-supply means (103) and said one end is not moved on movement of said trolley (59).

5. An apparatus as claimed in claim 1, 2 or 3, characterized in that said flexible cable tray (347) between the position where it is connected to the mast (209) and the position where it terminates a predetermined distance from the mast (209) has generally the shape of an S.

6. An apparatus as claimed in any of claims 1 to 5, characterized in that reel means (222—225) are provided on which the electrical and fluid conductors (331—339, 109) are wound, said reel means (222—225) being adapted to pay out said electric and fluid conductors (331—339, 109) when said engaging-raising-and-lowering means is moved downwardly and retracting said electric-and-fluid conductors (331—339, 109) when said engaging-raising-and-lowering means is moved upwardly.

7. An apparatus as claimed in any of claims 1 to 6, characterized in that a television camera is mounted on said apparatus near the end thereof which is to be positioned near said component assembly so as to enable said camera to view at least part of said component assembly, a television receiver is arranged in receiving communication with said camera so as to permit observation of said raising-and-lowering means for controlling engagement of said mast assembly with said component assembly, and that a source of light is mounted on said apparatus near its end in a position suitable for illumination of the part of the component assembly to be observed by the television camera.

**Patentansprüche**

1. Vorrichtung zum Auffüllen eines in einem Behälter eingesetzten Nuklear-Reaktors, die einen Mastenaufbau (61) zum Erfassen, Anheben und Absenken von ausgewählten Reaktorelementen aufweist, ein Förderschlitten (59) den Mastenausbau (61) stützt und zum Fördern sowie Anheben und Absenken dieses Mastenaufbaues (61) ausgelegt ist, über dem Reaktor eine Brücke (57) verschiebbar abgestützt ist, auf der eine erste Führungsschiene (121, 123) für den Förderschlitten (59) vorgesehen ist und mit dem erste Antreibsmittel (100, 106) verbunden sind, die den Förderschlitten (59) entlang der ersten Führungsschiene (121, 123) vor- und züruckbewegen, auf dem Behälter (55) eine zweite Führungsschiene (62, 63) für die Brücke (57) angeordnet ist, der zweite Antriebsmittel (126, 128, 130) zugeordnet sind, die die Brücke (57) entlang der zweiten Führungsschiene (62, 63) vor- und zurückbewegen, wobei die ersten und zweiten Führungsschienen (121, 123, 62, 63) in einer nicht parallelen Spur verlaufen, derart, dass die Bewegung der Brücke (57) entlang der zweiten Führungsschiene (62, 63) den Mastenaufbau (61) in einer Richtung und die Bewegung des Förderschlittens (59) den Mastenaufbau (61) in einer zweiten Richtung bewegt, der Mastenaufbau (61) einen Trägermast (20) aufweist, der drehbar am Förderschlitten (59) angeordnet und zum Anheben und Absenken von Bauelementen ausgelegt ist, dem Trägermast und den Mitteln zum Erfassen, Anheben und Absenken elektrische Betätigungseinrichtungen zugeordnet sind und am Förderschlitten (59) elektrische Einrichtungen vorgesehen und durch elektrische Leitungen (341) mit den elektrischen Betätigungseinrichtungen verbunden sind, dadurch gekennzeichnet, daß mit dem Trägermast (209) ein Ende eines biegsamen Kabelzuges (347) verbunden ist und sich hier mindestens teilweise um den Umfang des Trägermastes (209) und danach tangential von diesem Trägermast (209) weggführt ist und mit seinem gegenüberliegenden Ende in einem vorbestimmten Abstand vom Trägermast (209) endet, so daß beim Drehen des Trägermastes (209) in einer Richtung, dieser Kabelzug (347) um den Mast (209) gewickelt wird, während beim Drehen des Kabelzuges (347) in entgegensetzter Richtung der Kabelzug (347) vom Mast (209) abgewickelt wird, die elektrischen Leitungen (331 bis 339) beim Durchgang zwischen den elektrischen Betätigungseinrichtungen und den elektrischen Einrichtungen durch den Kabelzug (347) gesteckt sind und dem Aufwickel- und Abwickelvorgang des Kabelzuges (347) folgen, wobei die Teile der Leitungen, die von dem einen und dem entgegengesetzten Ende der Kabelzuges abstehen, durch die Drehung des Trägermastes (209) unbeeinflußt bleiben.

2. Vorrichtung nach Anspruch 1, dadurch gekennzeichnet, daß am Trägermast (209) hydraulisch betätigbare Einrichtungen (249) vorgesehen und durch eine Flüssigkeitsleitung (109) mit auf der Brücke (57) angeordneten, Pressflüssigkeit liefernden Einrichtungen (103) verbunden sind, wobei die Flüssigkeitsleitung (103) von den die Pressflüssigkeit liefernden Einrichtung (103) durch den Kabelzug (347) zu den hydraulisch betätigbaren Einrichtungen (249) führt.

3. Vorrichtung nach Anspruch 1 oder 2, dadurch gekennzeichnet, daß der Kabelzug (347) am Trägermast (209) so angeordnet ist, daß die biegsamen Seiten im wesentlichen vertikal übereinander ausgerichtet sind.

4. Vorrichtung nach Anspruch 1, 2 oder 3, dadurch gekennzeichnet, daß der Teil der Flüssigkeitsleitung (109) zwischen der Brücke (57) und dem Kabelzug (347) an einer Stelle zwischen der Brücke (57) und dem Kabelzug (347) mit dem Förderschlitten (59) verbunden ist, ein zweiter Kabelzug (177) an einem Ende an der Brücke (57) und am entgegengesetzten Ende am Förderschlitten (59) angeschlossen ist, die Leitung (109) durch den zweiten Kabelzug (177) geführt ist, wobei der Teil der Leitung (109), der zwischen den Flüssigkeit liefernden Einrichtungen (103) und dem einen Ende liegt, während der Bewegung des Förderschlittens (59) steht.

5. Vorrichtung nach Anspruch 1, 2 oder 3, dadurch gekennzeichnet, daß der biegsame Kabelzug (347) zwischen der Stelle, an der er mit dem Trägermast (209) verbunden ist und an der Stelle, an der er in einem bestimmten Abstand vom Trägermast (209) endet, im wesentlichen S-förmig verläuft.

6. Vorrichtung nach einem der Ansprüche 1 bis 5, dadurch gekennzeichnet, daß Spulen (222 bis 225) vorgesehen sind, um die die elektrischen Leitungen und die Flüssigkeitsleitungen (331 bis 339, 109) gewickelt sind, diese Spulen (222 bis 225) so ausgelegt sind, daß sie die Elektro- und Flüssigkeitsleitungen (331 bis 339, 109) abrollen, wenn die Einrichtungen zum Erfassen, Anheben und Absenken nach unten bewegt werden und die Elektro- und Flüssigkeitsleitungen (331 bis 339, 109) zurückholen, wenn diese Einrichtungen nach oben bewegt werden.

7. Vorrichtung nach einem der Ansprüche 1 bis 6, dadurch gekennzeichnet, daß angrenzend an das der Reaktor-Baueinheit benachbarte Ende der Vorrichtung eine Fernsehkamera vorgesehen und so angeordnet ist, daß sie zumindest einen Teil dieser Baueinheit sieht, der Kamera ein Bildempfänger zugeordnet ist, derart, daß zur Kontrolle des Eingriffs des Mastenaufbaus mit der Baueinheit die Anheb- und Absenkeinrichtungen beobachtet werden können, und daß am Ende der Vorrichtung eine Lichtquelle so angeordnet ist, daß der mit der Fernsehkamera zu beobachtende Teil der Baueinheit beleuchtbar ist.

**Revendications**

1. Appareil pour recharger un réacteur nucléaire disposé dans une enceinte, cet appareil comprenant un assemblage de mâts (61) pour saisir, soulever et abaisser des assemblages choisis parmi les assemblages de composants de ce réacteur, un chariot (59) supportant cet assemblage de mâts (61) et comportant des dispositifs pour soulever ou abaisser cet assemblage de mâts (61), un pont (57) supporté de façon mobile au-dessus du réacteur susdit et comportant une première voie (121, 123) pour le chariot (59), des premiers dispositifs d'entraînement (100, 106) fixés à ce chariot (59) pour le déplacement de celui-ci vers l'avant et vers l'arrière le long de la première voie susdite (121, 123), une seconde voie (62, 63) sur l'enceinte susdite (55) pour le pont (57), des seconds dispositifs d'entraînement (126, 128, 130) associés au pont (57) pour déplacer celui-ci vers l'avant et vers l'arrière le long de la seconde voie susdite (62, 63), les première et seconde voies (121, 123, 62, 63) s'étendant le long de trajets non parallèles, de telle sorte que le déplacement du pont (57) le long de la seconde voie (62, 63) entraîne un déplacement de l'assemblage de mâts susdit (61) dans un premier sens et que le déplacement de ce chariot (59) entraîne le déplacement de cet assemblage de mâts (61) dans un second sens, cet assemblage de mâts (61) comprenant un mât de support (209) monté à rotation sur le chariot (59) pour saisir, soulever et abaisser les assemblages de composants, des moyens d'actionnement électriques montés sur le mât de support susdit et sur les dispositifs de saisie, de soulèvement et d'abaissement en vue de leur fonctionnement, et des accessoires électriques supportés par le chariot (59) et reliés par des conducteurs électriques (341) aux dispositifs susdits d'actionnement électriques, caractérisé par un chemin flexible de câbles (347) connecté au mât de support (209) par une extrémité, en s'étendant depuis cette première extrémité de manière périphérique au moins partiellement autour de ce mât (209) et s'éloignant, à partir de là, tangentiellement depuis le mât susdit (209) et se terminant, à son extrémité opposée, à une distance prédéterminée dudit mât (209), de telle sorte que, lorsque ce mât (209) est mis en rotation dans un sens, ce chemin de câbles (347) s'enroule périphériquement sur le mât (209), et que, lorsque ce chemin de câbles (347) est mis en rotation dans le sens opposé, ce chemin (347) se déroule périphériquement depuis ledit mât (209), les conducteurs susdits (331—339), lorsqu'ils passent entre ces dispositifs d'actionnement électriques et les accessoires susdits, s'étendant à travers le chemin de câbles (347), les conducteurs (331—339) suivant l'enroulement et le déroulement de ce chemin de câbles (347), grâce à quoi les parties des conducteurs susdits qui s'étendent dans un sens les éloignant du chemin de câbles à partir de la première extrémité susdite et à partir de la seconde extrémité opposée ne sont pas affectés par la rotation du mât de support susdit (209).

2. Appareil suivant la revendication 1, caractérisé en ce que le dispositif actionnable par la pression d'un fluide (249) est monté sur le mât de support (209), un dispositif d'alimentation de fluide sous pression (103) est monté sur le pont (57), et un conducteur de fluide (109) est prévu pour raccorder le dispositif susdit d'alimentation de fluide sous pression (103) au dispositif actionnable par la pression d'un fluide (249), ce conducteur de fluide (109) s'étendant depuis le dispositif d'alimentation de fluide sous pression (103) jusqu'au dispositif actionnable par la pression d'un fluide (249) le long du chemin de câbles (347).

3. Appareil suivant l'une ou l'autre des revendications 1 et 2, caractérisé en ce que le chemin de câbles susdit (347) est monté sur le mât de support (209), de sorte que les côtés souples soient alignés d'une façon générale verticalement l'un au-dessus de l'autre.

4. Appareil suivant l'une quelconque des revendications 1, 2 et 3, caractérisé en ce que la partie du conducteur de fluide (109) se situant entre le pont (57) et le chemin de câbles (347) est fixée au chariot (59) à une position se situant entre le pont (57) et le chemin de câbles (347), et en ce qu'un chemin de câbles supplémentaire (177) est fixé, par une extrémité, au pont (57), et par son extrémité opposée, au chariot (59), ce conducteur (109) passant par le chemin de câbles supplémentaire susdit (177), de sorte que la partie de ce conducteur (109) comprise entre le dispositif d'alimentation de fluide (103) et ladite première extrémité n'est pas déplacée lors d'un mouvement du chariot (59).

5. Appareil suivant l'une quelconque des revendications 1, 2 et 3, caractérisé en ce que le chemin de câbles souple (347) entre la position où il est fixé au mât (209) et la position où il se termine à une distance prédéterminée du mât (209) a d'une façon générale la forme d'un S.

6. Appareil suivant l'une quelconque des revendications 1 à 5, caractérisé en ce que des dispositifs de bobinage (222—225) sont prévus, sur lesquels les conducteurs électriques et les conducteurs de fluide (331—339, 109) sont enroulés, ces dispositifs de bobinage (222—225) étant adaptés pour dérouler ces conducteurs électriques et ces conducteurs de fluide (331—339, 109) lorsque les dispositifs de saisie, de soulèvement et d'abaissement sont déplacés vers le bas, et pour enrouler ces conducteurs électriques et ces conducteurs de fluide (331—339, 109) lorsque ces moyens de saisie, de soulèvement et d'abaissement sont déplacés vers le haut.

7. Appareil suivant l'une quelconque des revendications 1 à 6, caractérisé en ce qu'une caméra de télévision est montée sur cet appareil au voisinage de l'extrémité de celui-ci, qui doit être située près de l'assemblage de composants susdit, de manière que cette caméra puisse observer au moins une partie de cet assemblage de composants, un récepteur de télévision est agencé pour être en communication avec cette caméra de manière à permettre une observation des moyens de soulèvement et d'abaissement afin de commander la préhension de cet assemblage de mâts par ledit assemblage de composants, et une source lumineuse est montée sur cet appareil, au voisinage de son extrémité à un endroit convenant pour éclairer la partie de l'assemblage de composants qui doit être observée par la caméra de télévision.

103
89
62
85
109
79
III
77
123
99
121
173
50
87
59
XIII
171
162
101
142
XIII
91
146
344
223
225
61
92
265
X
X
142
219
347
95
97
81
57
83
III
63
II
II

FIG.1.

89
91
87
225
223
227
50
219
229
218
265
217
347
203
61
90
213
171
101
209
59
211
92
135
125
127
162
121
103
107
123
133
109
95
79
65
73
77
71
57
69
55
IIIA
XI
IX

FIG. 2.

89
87
91
223
227
219
218
229
217
222
203
201
50
213
181
209
211
61
59
19
99
93
95
57
63
62
55
53
207
285
288
286
290
51

FIG. 3.

121
75
133
104
135
102
73
77
87
83
77
121
81
108
100
106
110
119

FIG.3A.

FIG.3B.

148
170
171
116
135
144
146
162
116
118
114
120
142
156
152
142
125
135

FIG.3C.

133
136
129
127
126
142
130
122
128
144
134
116
124
146
171
125
135
138
129
136
142

FIG.3D.

75
71
73
80
111
76
96
78
84
97

FIG. 4.

133
127
131
135
162
116
143
139
148
141
145
147

FIG. 5.

133
162
175
173
177
179
109

FIG.5A.

263
219
267
261
218

FIG.6.

74
68
66
64
63
VIII
VIII
FIG.7.
57
75
88
86
64
69
73
65
63
72
FIG.9.
55
64
68
72
63
74
66
70
FIG.8.

131
135
127
155
123
153
79

FIG.10.

139
131
123

FIG.11.

FIG.12.

98
80
73
71
63

177
116
175
173

FIG.13.

215
XV
201
213
313
315
321
319
XV

FIG.14.

FIG.15.

315
311
213
323
317
319
321

223
225
227
229
219
222
218
50
217
59
181
260
251
XVI-A
XVI-A
255
247
239
241
273
243
249
251
237
203
201
287
61
205
213
215
289
231
209
207
233
281
299
211
92
253
297

FIG.16.

201
272
271
243
273

FIG. 16A.

100
126
265
150
164
269
COMPUTER
IN CONTROL
CONSULE
94
96
102
151
159
267
275

FIG. 17.

254
256
249
381
301
299
303
293
291
295
393
61
373
389
385
391
387
383
181
183
103
112
375
109
59
57

FIG. 18.

361
61
201
295
341
333
345
223
331
288
286
339
303
293
343
301
346
347
363
359
349
351
353
355
90
367
357


FIG.19.

241
249
251
345
237
231
339
341
343
337
287
335

FIG.20.

FIG.30.

341
412
347
414
109
416
377
349

PIVOT 1
PIVOT 2
PIVOT 3
PIVOT 4
PIVOT 5
PIVOT6
PIVOT 7
PIVOT8
PIVOT9
PIVOT10
PIVOT11
PIVOT12
347
411
PIVOTS 1 THRU 6
415
419
PIVOTS 7 THRU 12
417
419

FIG.21.

FIG.22.

FIG.22A.

225
397
223
401
395
381
227
229
398
222
399
181
221
183
403
217
201
109

FIG. 23.

177
77
121
109
59
179
103
112
107

FIG.24.

381
MANIFOLD
347
341
109
217
181
183
431
433
201
209
211
92

FIG. 25.

347
341
217
431
371
433
201
59
209
211
92

FIG. 26.

347a
341
431
201
431
347b
FIG. 27.
FIG. 33.
288
290
286
353
351
347
349
345
FIG. 35.

225
223
218
217
227
229
377
347
61
349
201
351
50
209
211
59

FIG. 27A.

109
347
431
363
371
377
201
345
365

FIG.27B.

397
395
225
373
373
381
385
383
181

FIG.31.

218
347
217
349
377
109
433
351
201

FIG.28.

156
154
92
59

FIG.32.

327
363
365
345
35
349
351

FIG. 29.

233
61
286
285
207

FIG. 34.